# FASCICULE DE BREVET EUROPEEN

(11) **EP 2 290 430 B1**
(45) Date de publication et mention de la délivrance du brevet: **25.07.2018**
(21) Numéro de dépôt: 10173995.1
(22) Date de dépôt: 25.08.2010
(51) Int. Cl.: G01B 11/27, G02B 23/06, G01B 11/26, G02B 27/64

(54) **Dispositif de mesure de bougé de ligne de visée d'instrument optique**
Messsystem zur Bestimmung der Variation der Ziellinie eines optischen Instrumentes
System for measuring the variation of an optical line of sight of an optical instrument

(30) Priorité: 28.08.2009 FR 0955864
(43) Date de publication de la demande: 02.03.2011
(73) Titulaire: Airbus Defence and Space SAS, 31402 Toulouse Cedex 4 (FR)
(72) Inventeur: VAILLON, Ludovic, 31400, TOULOUSE (FR); DEYBER, Stéphane, 81370, SAINT-SULPICE (FR)
(74) Mandataire: Ipside

(56) Documents cités:
- US-A- 4 662 727
- US-A- 5 220 456
- US-A1- 2002 145 102

## Description

La présente invention relève du domaine de l'instrumentation optique. Elle concerne plus précisément les instruments d'observation à distance comportant un chemin optique complexe et nécessitant un pointage précis.

### Contexte de l'invention et problèmes posés

Dans le domaine de l'observation à distance, de nombreux dispositifs nécessitent de maintenir un pointage stable de l'instrument d'observation, indépendamment des perturbations générées par les nombreuses sources de vibrations, aléatoires en fréquence et amplitude, créées par le montage mécanique et le dispositif de support.

C'est par exemple le cas des moyens d'acquisition des images tels qu'on les connaît dans le domaine de l'observation planétaire, par satellite ou par avion, utilisant typiquement un détecteur barrette ou matriciel, et un déplacement du support du capteur permettant un balayage d'une bande de la surface planétaire observée.

Le pointage d'un point fixe (ligne de visée) est donc nécessaire à la reconstitution des images, et, à défaut, il est souhaitable de connaître le mouvement instantané (appelé couramment "bougé") de la ligne de visée.

Il est clair que plus la résolution de l'image est élevée, plus le besoin d'une ligne de visée stable est grand.

Dans un même ordre d'idée, des dispositifs de communication par laser, par exemple entre satellites, nécessitent également un pointage extrêmement précis de leur ligne de visée. Un problème analogue de stabilisation de ligne de visée se pose alors.

Des solutions de stabilisation de ligne de visée optique ont déjà été envisagées. L'une des solutions connue est de placer la plate-forme optique sur un système d'amortissement de vibrations, par exemple un système actif de détection des vibrations et de correction en temps réel de ces vibrations. Cependant, ces dispositifs sont complexes, contraignants pour la conception de l'instrument et présentent souvent des performances insuffisantes pour les systèmes d'imagerie à distance actuellement envisagés. Par ailleurs, le montage optique lui-même est susceptible de générer des perturbations de la ligne de visée, qui naturellement ne sont pas corrigées par un système tel que décrit précédemment.

Une autre solution est alors fournie par l'utilisation, connue en soi, d'une référence dite inertielle, telle que par exemple une étoile, dont la position est sensiblement fixe par rapport à la terre sur la durée d'acquisition d'une image.

Une autre solution est présentée dans le document brevet US 6.700.109 B2 de 2004. Dans ce document, un dispositif de correction active de vibrations de la ligne de visée, utilise un générateur de référence pseudo-inertielle, qui prend la forme d'une source laser, stabilisée inertiellement avec un dispositif propre de contrôle actif.

Cette source laser est disposée de telle sorte que son rayon suive sensiblement le chemin optique des rayons lumineux issus de la zone observée, de sorte que les modifications de visée de cette source pseudo-inertielle, peuvent être considérées comme intégralement dues aux vibrations de la plate-forme optique. Ces vibrations sont alors détectées par un détecteur matriciel placé au voisinage du capteur d'image, et corrigées en jouant sur l'orientation d'un des miroirs de renvoi du faisceau lumineux sur le chemin optique.

Cependant, la mise en oeuvre d'un système de contrôle actif à l'entrée de l'instrument optique est complexe et a un fort impact sur la conception de l'instrument, par exemple impose la création d'un réseau électrique pour alimenter ce système, et modifie les contraintes de contrôle thermique, ce qui augmente le coût de l'instrument. La publication du brevet délivré US 4,666,727 concerne un système de maintien de ligne de visée comprenant un gyroscope comme référence.

### Objectifs de l'invention

L'objectif de la présente invention est alors de proposer un nouveau dispositif de mesure du bougé de ligne de visée, et ainsi de répondre à une partie au moins des problèmes décrits ci-dessus.

Selon un second but de l'invention, celle-ci est particulièrement adaptée au traitement de vibrations dans une bande de fréquences allant d'environ 10 Hz à quelques centaines de Hz.

### Exposé de l'invention

A cet effet, l'invention vise un dispositif de mesure de bougé d'une ligne de visée d'un instrument optique comportant les caractéristiques de la revendication 1. Des modes de réalisation additionnels sont définis dans les revendications dépendantes.
le dispositif comportant au moins une référence lumineuse disposée sur le chemin optique de mesure, des moyens passifs d'isolation de cette référence lumineuse vis à vis de vibrations latérales transmises par la plate-forme optique dans une gamme de fréquences prédéterminée, créant ainsi une référence lumineuse pseudo-inertielle.

Par "pseudo-inertielle", on entend ici une référence mécaniquement découplée des bougés de la plate-forme dans une gamme de fréquences déterminée. Un point significatif de l'invention est que ce sont les moyens d'isolation passive qui créent une référence pseudo-inertielle. Son comportement est principalement identique, dans une gamme de fréquences particulière définie par le choix des moyens passifs d'isolation, à celui d'une référence inertielle gyro-stabilisée. La mise en oeuvre du dispositif tel qu'exposé est par contre nettement plus simple car ne nécessite pas de pièce en rotation (pour créer une référence inertielle) ou de moyens actifs de stabilisation .à partir d'une mesure gyroscopique.

On comprend ici que la référence lumineuse pseudo-inertielle peut être soit la source lumineuse de mesure elle-même, soit un miroir disposé sur le chemin optique.

Préférentiellement, la bande de fréquence d'isolation du miroir de collimation est comprise entre quelques Hz et quelques centaines de Hz.

Selon un mode de réalisation, la référence lumineuse pseudo-inertielle est un miroir de collimation destiné au renvoi du faisceau optique, disposé sensiblement sur le chemin optique d'observation, à l'autre extrémité du chemin optique d'observation, par rapport à la source lumineuse de mesure.

Alternativement, la référence lumineuse pseudo-inertielle est la source lumineuse, par exemple laser, dotée de moyens d'isolation passive, et mécaniquement découplée de la plate-forme. La source lumineuse peut être disposée dans le plan focal à côté du détecteur de mesure, associée à un miroir de collimation lié à la plate-forme. La source lumineuse peut aussi être disposée en entrée de l'instrument, à la place du miroir de collimation. Dans ce dernier cas, le faisceau lumineux ne fait qu'un aller simple dans l'instrument, ce qui diminue la sensibilité.

Selon le mode de réalisation préféré, au moins un isolateur passif comporte un segment sous forme de poutre en matériau souple à fort coefficient d'amortissement, par exemple un matériau élastomère, adaptée à filtrer les vibrations latérales qui sont imposées à son support dans la gamme de fréquences prédéterminée.

Par latérales, on entend ici les vibrations de la plate-forme pouvant entraîner une variation de la direction de réflexion du miroir ou d'émission de la source.

Dans la suite, pour raison de clarté, on qualifie d'élastomère le matériau du corps souple, sans que cela préjuge de la nature de ce matériau.

Avantageusement, l'isolateur passif est une poutre en élastomère de section convergente / divergente dite "diabolo".

Alternativement, l'isolateur passif est une poutre en élastomère de section constante solidarisé en ses deux extrémités, d'une part au niveau d'une structure qui soutient la référence lumineuse pseudo-inertielle, et, d'autre part, au niveau de l'interface avec l'instrument optique.

De manière à permettre un amortissement des fréquences de vibrations comprises entre environ 10 Hz et quelques centaines de Hz, la poutre en élastomère est préférentiellement réalisée en matériau présentant un module d'Young faible et évoluant peu dans la gamme de température fonctionnelle.

Préférentiellement, le dispositif comporte une structure intermédiaire rigide, solidarisée par une extrémité à la plate-forme de l'instrument optique, cette structure intermédiaire comportant des moyens de limitation de déplacement de l'interface structurelle de la référence lumineuse pseudo-inertielle, lorsque l'instrument est soumis à des conditions d'accélération comprises dans une plage prédéterminée.

On comprend que ces moyens sont destinés à reprendre les efforts mécaniques générés par exemple par une accélération verticale temporaire, de manière à éviter de transmettre au support en élastomère des efforts disproportionnés avec sa résistance mécanique, ces moyens ne gênent pas le libre déplacement de l'interface structurelle du miroir de collimation lorsque l'instrument n'est pas soumis à ces conditions d'accélération, ledit déplacement étant alors compris dans un intervalle de valeurs préalablement déterminé. Cet intervalle correspond à l'amplitude maximale des vibrations auxquelles peut être soumis l'instrument optique durant son utilisation opérationnelle.

Avantageusement dans ce cas, la structure intermédiaire comporte des bords inférieurs munis de butées, solidarisée à l'interface structurelle du miroir de collimation, la disposition respective des butées et des bords inférieurs de la structure intermédiaire déterminant un espace libre lorsque l'instrument optique est en conditions opérationnelles, par exemple en gravité nulle pour une utilisation en orbite.

Dans ce cas, le miroir de collimation est suspendu par les supports en élastomère sans contact sur les butées, et présente un comportement pseudo-inertiel.

Selon un mode de réalisation particulier, la référence lumineuse pseudo-inertielle est suspendue par un isolateur passif unique, dirigé sensiblement selon un axe normal au miroir de collimation.

Selon un second mode de réalisation, la référence lumineuse pseudo-inertielle est suspendue par N isolateurs passifs (N > 1) ayant leurs axes disposés dans un même plan perpendiculaire à la direction de l'axe vertical du miroir de collimation, ces N axes concourant au niveau de l'axe vertical du miroir de collimation, ces isolateurs passifs étant régulièrement angulairement espacés. Par exemple, la configuration avec 3 isolateurs disposés à 120 degrés constitue un cas particulier intéressant mais d'autres configurations sont possibles.

Selon un autre mode de réalisation, la référence lumineuse pseudo-inertielle est suspendue par N isolateurs passifs (N > 1), d'axes colinéaires, parallèles à l'axe vertical du miroir de collimation, et agencés régulièrement sur un cercle sous l'interface structurelle. Par exemple, la configuration avec 3 isolateurs disposés aux sommets d'un triangle équilatéral centré sur l'axe du miroir constitue un cas particulier intéressant, mais d'autres configurations sont possibles.

L'invention vise sous un autre aspect un dispositif de contrôle actif de vibrations haute fréquence de ligne de visée d'instrument optique, ledit dispositif de contrôle comportant un dispositif de mesure de bougé tel qu'exposé et en outre des moyens de corriger le bougé du faisceau optique d'observation en jouant sur l'orientation d'un miroir plan commandable placé sur le chemin optique d'observation.

### Brève description des figures

La description qui va suivre, donnée uniquement à titre d'exemple d'un mode de réalisation de l'invention, est faite en se référant aux figures annexées dans lesquelles :
La figure 1 est un schéma de principe du dispositif de mesure de bougé de ligne de visée ("LoS Jitter" en langue anglaise) selon l'invention,
La figure 2 illustre de même le principe de mesure, d'une part pour le chemin optique issu de la scène observée (figure 2A), d'autre part pour le chemin optique "source laser + miroir isolé" (figure 2B),
La figure 3 montre de façon schématisée la géométrie du support en élastomère, avec une version à section constante (figure 3A) et une version à section dite en "diabolo" (figure 3B),
La figure 4 illustre de même deux géométries d'isolateurs en "diabolo",
La figure 5 schématise un montage de miroir sur un support "diabolo",
Les figures 6a et 6b illustrent de même deux montages utilisant trois "diabolos",
La figure 7 illustre une fonction de transfert d'un dispositif tel que décrit.

### Description détaillée d'un mode de réalisation de l'invention

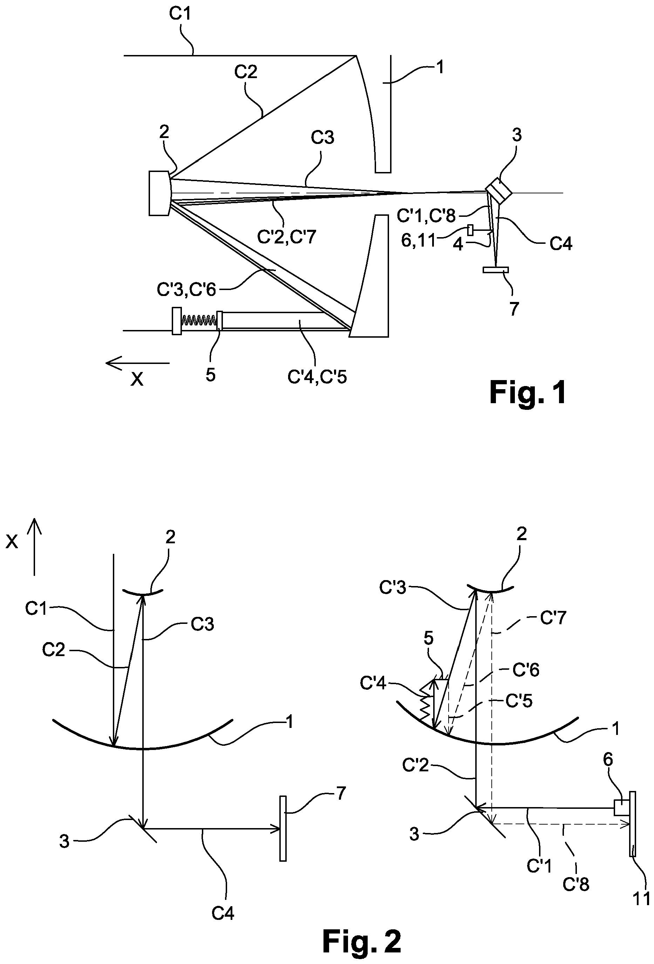

Comme on le voit sur la figure 1, le dispositif selon l'invention trouve sa place au sein d'un instrument d'optique permettant l'observation à distance d'objets situés dans une direction prédéterminée X par rapport audit instrument.

L'instrument dont il est question dans le présent exemple nullement limitatif est destiné à être embarqué sur un satellite, et donc à fonctionner dans un environnement à gravité nulle.

L'instrument comporte un miroir primaire 1, qui reçoit les rayons lumineux issus de l'objet observé (segment C1 du chemin optique d'observation C), et les concentre sur un miroir secondaire 2 convexe (segment C2 du chemin optique d'observation C). Ce miroir secondaire 2 renvoie à son tour le faisceau lumineux (segment C3 du chemin optique d'observation C) vers un miroir plan 3, orienté sensiblement à 45° de la direction d'observation X, et dont l'orientation autour de deux axes perpendiculaires à sa normale est commandable.

Le miroir plan commandable 3 est dans le présent exemple un miroir de quelques dizaines de millimètres de diamètre, monté sur des lames métalliques flexibles. Des actuateurs électromagnétiques permettent de modifier l'orientation du miroir sur deux axes, avec une amplitude de quelques milliradians à quelques dizaines de milliradians. Des capteurs capacitifs sont utilisés pour déterminer à chaque instant l'orientation dudit miroir plan commandable 3.

Ce miroir plan commandable 3 sort cependant en tant que tel du cadre de la présente invention et n'est donc pas décrit plus avant ici.

Le faisceau lumineux issu de ce miroir plan commandable 3 (segment C4 du chemin optique d'observation C) est intercepté par un détecteur d'observation 7 placé au plan focal. Le chemin optique d'observation C est schématisé figure 2a.

Les différents éléments de l'instrument optique qui viennent d'être décrits sont de type connu en soi et sortent en tant que tels du cadre de la présent invention. Ils ne sont donc pas décrits plus avant ici.

Par contre, le dispositif selon l'invention comporte en outre un second chemin optique C', de mesure de bougé à haute fréquence de la ligne de visée (voir la figure 2b). On entend ici par haute fréquence une bande de fréquence comprise entre quelques Hz et quelques centaines de Hz.

Ce chemin optique de mesure C' comporte en premier lieu une source lumineuse 6, disposée au plan focal de l'instrument optique. Cette source 6 prend par exemple la forme d'une diode laser opérant dans le spectre visible ou proche infrarouge, compatible avec des détecteurs Silicium de type CCD ou CMOS. Du fait de la longueur très courte du chemin optique, de l'ordre de quelques mètres dans le cas d'instruments d'observation à distance, une puissance de moins de 1 milliwatt est suffisante pour la diode laser 6.

Dans le présent exemple non limitatif, la diode laser 6 est couplée au plan focal de l'instrument optique grâce à une fibre optique connue en soi, ce qui permet d'éloigner la diode laser 6 elle-même du chemin optique de mesure C'.

La diode laser 6 est équipée d'une optique de collimation de type connu en soi, utilisée pour réduire la dispersion du faisceau issu de ladite diode laser 6, de manière à ce que ce faisceau reste en permanence inclus dans la surface des miroirs placés sur son chemin optique C'.

Cette diode laser 6 émet un faisceau lumineux de mesure vers un miroir de renvoi 4 (non représenté sur la figure 2b, mais visible sur la figure 1), qui le renvoie à son tour vers le miroir plan 3 (segment C'1 sur le chemin optique de mesure C').

Le faisceau optique de mesure est alors renvoyé tout d'abord vers le miroir secondaire 2, puis vers un bord du miroir primaire 1 (segments C'2 et C'3 du chemin optique de mesure C'). Après réflexion sur le miroir primaire 1, le faisceau optique de mesure vient frapper un miroir de collimation 5 pseudo-inertiel, disposé perpendiculairement à ce faisceau optique (segment C'4 du chemin optique de mesure C').

Ce miroir de collimation 5 est dit pseudo-inertiel car il est disposé sur un support en élastomère 8 adapté à filtrer les vibrations latérales à haute fréquence qui sont imposées à son support.

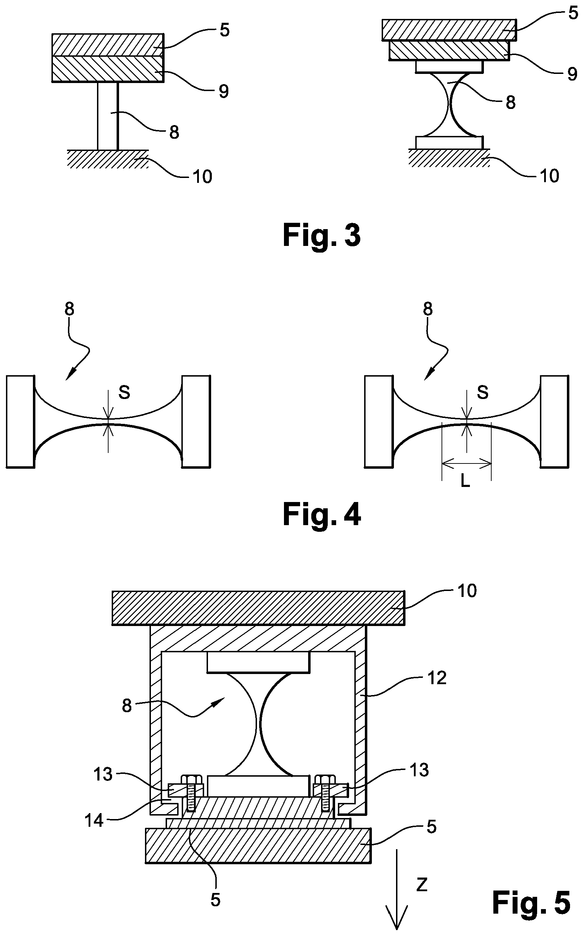

Deux dispositions sont schématisées figure 3 : un support en élastomère 8 de section constante (figure de gauche 3a) et un support en élastomère 8 de section convergente / divergente dite "diabolo" (figure de droite 3b).

On reconnaît sur ces figures 3a et 3b le miroir de collimation 5 pseudo-inertiel, une interface structurelle, par exemple métallique, 9, le support en élastomère 8, et le socle formant partie de la plate-forme 10 de l'instrument d'optique.

Dans le présent exemple, le miroir de collimation 5 présente un diamètre de l'ordre de quelques dizaines de millimètres, l'interface structurelle métallique a une épaisseur d'environ deux millimètres, et la masse de l'ensemble (miroir de collimation 5 + interface structurelle métallique 9) est de quelques dizaines de grammes. C'est cette masse qui doit être isolée des vibrations haute fréquence par le support en élastomère.

La disposition préférée du support en élastomère 8, en "diabolo", assure à la fois une bonne fixation du support en élastomère 8 sur l'interface structurelle 9 supportant le miroir de collimation 5 pseudo-inertiel, et une bonne isolation des haute fréquences, du fait de sa section minimale S faible.

De façon plus détaillée, plusieurs variantes de forme du support en élastomère 8 de type "diabolo" peuvent être envisagées, telles que par exemple illustrées figure 4.

Ces variantes se distinguent par la section minimale S et par la longueur L de la partie mince.

On constate, par un calcul connu en soi, qu'il est préférable d'avoir une section minimale S la plus mince possible, et une longueur L de la partie mince la plus grande possible pour ramener les deux premiers modes propres de vibration latérales de l'ensemble (support en élastomère 8 + miroir de collimation 5 + interface structurelle métallique 9) dans une gamme de fréquence très basse, voisine ou inférieure à une dizaine de Hz, conformément au besoin de l'application d'isolation envisagée.

Dans le cas présent, une section minimale S de diamètre un à deux millimètres de diamètre est choisie. La longueur L de la partie mince est de quelques millimètres, et la longueur totale du support en élastomère 8 de vingt millimètres environ.

Typiquement, pour une excitation latérale de 1 mm du support en élastomère 8 supportant l'ensemble (miroir de collimation 5 + interface structurelle métallique 9) à une fréquence inférieure à un Hz, le déplacement du miroir de collimation 5 est sensiblement identique voire supérieur à un millimètre. Entre un et dix Hz de fréquence d'excitation, le déplacement résultant du miroir de collimation 5 passe par un minimum de l'ordre de quelques centièmes de millimètre, avant de revenir autour de un millimètre pour le second mode résonant du support en élastomère 8.

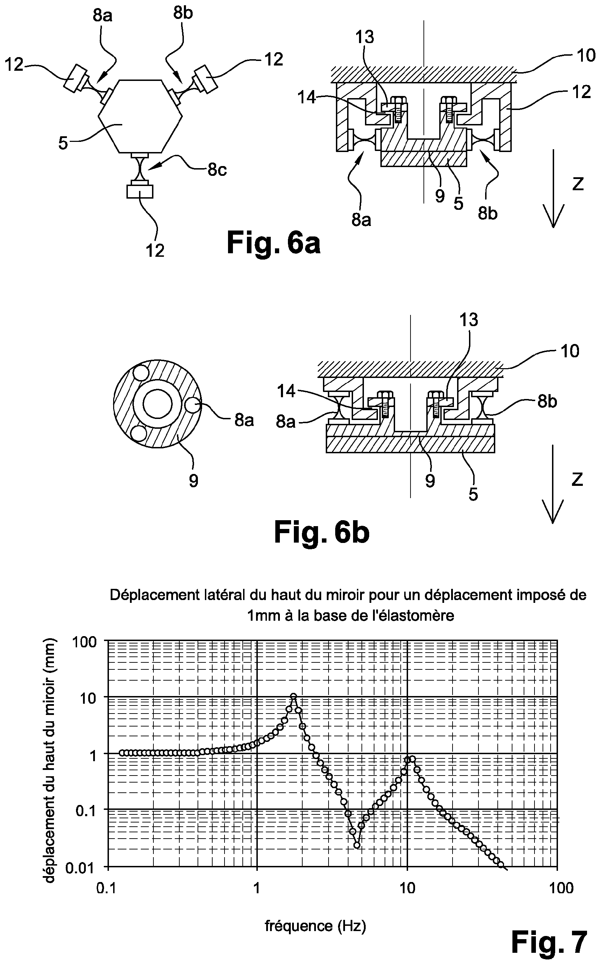

La figure 7 illustre la fonction de transfert d'un dispositif tel que décrit.

Au dessus d'une fréquence d'excitation de dix Hz, le déplacement résultant du miroir de collimation 5 descend rapidement avec la fréquence, pour être inférieur à un centième de millimètre au dessus d'environ cent Hz.

On obtient bien un amortissement des vibrations hautes fréquence et un référentiel "pseudo-inertiel" dans ces fréquences.

Dans le présent exemple, le support en élastomère 8 est réalisé dans un matériau élastomère constitué d'un mélange de caoutchouc naturel et de butyl, dans des proportions résultant d'un compromis :
- le caoutchouc naturel apporte une souplesse, des propriétés d'isolation à haute fréquence et une stabilité en fonction de la température élevées ; cependant il ne possède pas des propriétés d'amortissement importantes.
- le butyl apporte des propriétés d'amortissement intéressantes sur les modes propres de l'ensemble, de manière à limiter les amplifications de déplacement sur ces modes ; en revanche, il a tendance à être moins souple et moins bon en isolation à haute fréquence

Le support en élastomère est fabriqué par un procédé connu de l'homme de l'art, par exemple par moulage.

Le faisceau optique de mesure suit ensuite un chemin optique inverse (segments C'5 à C'8 du chemin optique de mesure C'), dit faisceau laser retour, qui l'amène à un détecteur de mesure 11, monté au voisinage immédiat le la diode laser 6. Le chemin optique de mesure C' est schématisé figure 2b.

Comme on le constate, le chemin optique de mesure C' est formé de segments sensiblement confondus avec les segments du chemin optique d'observation C. Comme on le comprend, le faisceau de mesure parcourt deux fois le chemin optique d'observation dans sa partie intérieure à l'instrument optique, ce qui augmente la sensibilité de la mesure aux déformations de ce chemin optique d'observation.

On comprend qu'en l'absence de tout déplacement ou déformation de la ligne de visée, les rayons lumineux issus de l'objet à observer parviennent au centre du détecteur d'observation 7 placé au plan focal de l'instrument (dans le cas d'un objet ponctuel situé à l'infini).

De même, en l'absence de toute déformation du chemin optique de mesure C', les rayons lumineux issus de la diode laser 6 reviennent après parcours du chemin optique de mesure C' sur cette diode laser 6. On impose par construction et alignement un léger biais d'orientation du miroir de collimation afin que les rayons réfléchis viennent se focaliser au centre du détecteur d'observation 7.

Par contre, en cas de mouvement ou déformation de l'instrument optique, sous l'effet de vibrations à haute fréquence, le faisceau optique issu de l'objet observé est décentré par rapport au détecteur d'observation 7.

Simultanément, le miroir de collimation 5 pseudo-inertiel étant suspendu sur un support isolé des vibrations haute fréquence, en cas de mouvement ou déformation de l'instrument optique du fait de ces vibrations haute fréquence, ce miroir de collimation 5 pseudo-inertiel ne bouge pas, alors que le reste de l'instrument optique bouge, et le faisceau optique de mesure atteint le détecteur de mesure 7 à côté de la diode laser 6.

La détermination de ce décalage du faisceau optique de mesure, est réalisée à l'aide d'un senseur écartométrique sortant du cadre de la présente invention.

Les fonctions du senseur écartométrique sont, d'une part, lors de la mise en fonctionnement de l'instrument optique, de détecter la position initiale du faisceau laser retour (due à un désalignement éventuel du miroir de collimation 5 pseudo-inertiel), et, d'autre part, en fonctionnement normal, de mesurer, à intervalles réguliers, l'écart entre la position du faisceau laser retour et cette position initiale. Cette mesure d'écart est par exemple réalisée en parcourant les pixels du senseur les plus proches de la position précédente mesurée.

Cette détermination de décalage du faisceau optique de mesure ("bougé" de la ligne de visée), permet alors de corriger le décalage du faisceau optique d'observation en jouant sur l'orientation du miroir plan commandable 3.

Le détecteur d'observation mesure les bougés de la ligne de visée à une cadence bien supérieure à la fréquence des vibrations à compenser, en pratique entre quelques centaines et quelques milliers de Hz.

L'utilisation d'un procédé de calcul numérique (connu en soi) permet de commander le miroir plan 3 afin de compenser en boucle fermée les bougés angulaires autour des deux axes perpendiculaires à la ligne de visée. Son utilisation avec une configuration donnée d'instrument optique et de support en élastomères, permet de valider que les vibrations haute fréquence entre environ 10 Hz et quelques centaines de Hz sont effectivement rejetées par le dispositif de contrôle actif de ligne de visée tel que décrit.

Dans le mode particulier de réalisation envisagé ici, adapté à un instrument optique intégré sur un satellite, des contraintes particulières liées au lancement du satellite doivent être prises en compte dans la conception du support du miroir de collimation 5 pseudo-inertiel.

La figure 5 illustre alors, en vue de côté, une première configuration de structure de support du miroir de collimation 5. Sur cette figure 5 est indiquée une direction Z. On note que cette direction Z n'est pas nécessairement la verticale locale. En effet, les efforts au lancement sont certes plus importants selon la verticale, mais les mouvements dynamiques du lanceur font que les efforts latéraux sont aussi bien au-delà de la résistance de l'élastomère. Le système de butées doit donc assurer la limitation des mouvements selon les 3 directions. Il n'y a donc pas lieu de contraindre l'orientation du miroir par rapport à la verticale durant le lancement.

On retrouve sur cette figure le miroir de collimation 5 pseudo-inertiel, l'interface structurelle 9, le support en élastomère 8, et le socle formant partie de la plate-forme 10 de l'instrument d'optique, sensiblement alignés selon la direction Z.

Par contre, le dispositif comporte également ici une structure intermédiaire 12, par exemple réalisée en métal ou en matériau composite, et solidarisée par son extrémité supérieure à la plate-forme 10 de l'instrument optique. Cette structure intermédiaire 12 coopère par ses bords inférieurs avec des butées démontables 13, fixées par exemple par boulonnage sur l'interface structurelle 9 du miroir de collimation 5.

Comme on le voit figure 5, la disposition respective des butées 13 et des bords inférieurs de la structure intermédiaire 12 détermine un espace libre 14 lorsque l'instrument optique est en conditions de gravité nulle. Dans ce cas, le miroir de collimation 5 est uniquement suspendu par le support en élastomère 8, et présente, comme on l'a dit, un comportement pseudo-inertiel.

Au contraire, en gravité terrestre ou lors du lancement, les butées 13 viennent reposer sur les bords inférieurs ou latéraux de la structure intermédiaire 12, et reprennent donc les efforts générés par le lanceur ou la gravité, sans que le support en élastomère 8 soit soumis à une traction excessive. Plus généralement, ce dispositif limite les translations dans les trois directions possibles, ainsi que les rotations selon ces axes.

Afin de pouvoir tester le dispositif sous gravité, celui-ci doit être disposé selon la figure 5 où la gravité est dirigée vers le bas. Les butées 13 sont alors démontées et le miroir se retrouve suspendu par l'élastomère. La raideur en traction de l'élastomère doit être suffisante pour que l'élongation sous l'effet de la gravité ne l'endommage pas et permette de mesurer les performances de suspension.

Le dimensionnement de la structure intermédiaire 12 est effectué de façon connue de l'homme de l'art, en tenant compte des charges maximales à reprendre durant le lancement (notamment les déformations maximales admissibles dans l'élastomère, imposant l'utilisation des butées précédemment décrites).

Dans un autre mode de réalisation illustré de façon schématique figure 6a (en vue de dessous et en vue de côté), également adapté à la reprise des efforts générés au lancement du satellite portant l'instrument optique, le miroir de collimation 5 est suspendu par trois supports en élastomères 8a, 8b, 8c de type "diabolo".

Ces trois supports en élastomères 8a, 8b, 8c ont ici leurs axes disposés dans un même plan perpendiculaire à la direction verticale Z, ces trois axes concourant au niveau de l'axe vertical du miroir de collimation 5. Ces trois supports en élastomères 8a, 8b, 8c sont angulairement espacés de 120°.

On obtient ainsi une réduction de fréquence des premiers modes propres d'oscillation de l'ensemble (support en élastomère 8 + miroir de collimation 5 + interface structurelle métallique 9).

Dans ce mode de réalisation, lors du lancement, les supports en élastomère 8a, 8b, 8c sont principalement déformés latéralement, au contraire du dispositif précédent, dans lequel la déformation principale était longitudinale.

Il est clair qu'il est envisageable de disposer un nombre plus grand de supports en élastomères 8 sans modifications substantielles du dispositif.

Dans une variante de mise en oeuvre de l'invention, le miroir de collimation 5 est suspendu par trois supports en élastomère 8, d'axes colinéaires, dirigés sensiblement selon un axe perpendiculaire au plan du miroir de collimation 8, et agencés en triangle sous l'interface structurelle 9

### (figure 6b)

On comprend que le dispositif passif d'amortissement de vibrations haute fréquence de ligne de visée qui vient d'être décrit est nettement plus simple et moins coûteux qu'un système actif, par exemple basé sur des senseurs inertiels tels que des gyroscopes.

### Variantes de l'invention

La portée de la présente invention ne se limite pas aux détails des formes de réalisation ci-dessus considérées à titre d'exemple, mais s'étend au contraire aux modifications à la portée de l'homme de l'art.

Dans une première variante, la source lumineuse 6 est montée sur un support en élastomère tel que décrit et disposée à la place du miroir de collimation. Dans ce dernier cas, le faisceau lumineux ne fait qu'un aller simple dans l'instrument, ce qui diminue la sensibilité. Alternativement dans cette même variante, la source lumineuse sur son support élastomère est placée à proximité du détecteur de mesure 11 et le miroir de collimation 5 est rigidement lié à la plate-forme 10 de l'instrument d'optique.

Alternativement, la source lumineuse 6 est fixée à la plate-forme 10 de l'instrument, mais envoie son faisceau laser sur un miroir de renvoi (non représenté sur les figures) monté sur support en élastomère tel que décrit, disposé à proximité de cette source laser 6. Ce miroir pseudo-inertiel place le faisceau de mesure sur le chemin optique de mesure C'. Le principe de fonctionnement du dispositif reste sensiblement identique.

La description a été faite pour le cas d'instrument utilisé en gravité nulle. Dans un environnement à gravité non nulle, le fonctionnement reste similaire pour autant que le support en élastomère 8 soit disposé selon une direction sensiblement verticale, le miroir de collimation 8 étant suspendu à ce support 8. Le support en élastomère 8 est alors toujours soumis à une élongation légère due à la gravité.

Dans le cas de supports multiples 8a, 8b, 8c, le fonctionnement reste de même sensiblement équivalent, avec un miroir de collimation suspendu verticalement à l'ensemble des supports. Ceux-ci sont alors, en fonctionnement sous gravité, légèrement déformés latéralement.

Il est possible en variante de la présente invention de considérer d'autres formes de support en élastomère 8 que les formes à section droite ou en diabolo telles que décrites, dès lors qu'elles comportent au moins un segment mince allongé.

Par exemple, dans une variante non illustrée de réalisation du support en élastomère 8, celui-ci est configuré sous forme d'un segment de section sensiblement constante, d'environ un à deux millimètres de diamètre pour une masse suspendue de quelques dizaines de grammes, encastré en ses deux extrémités longitudinales, d'une part au niveau de la structure métallique 9 qui soutient le miroir de collimation 5, et, d'autre part, au niveau de la plate-forme 10 ou de la structure intermédiaire 12.

Dans une autre variante, également non illustrée, de mise en oeuvre de l'invention, le miroir de collimation 5 est suspendu par N supports en élastomère 8, d'axes colinéaires, dirigés sensiblement selon un axe perpendiculaire au plan du miroir de collimation 8, et agencés selon une disposition angulairement régulière sous l'interface structurelle 9.

## Revendications

1. Dispositif de mesure de bougé d'une ligne de visée d'un instrument optique comportant un chemin d'observation (C), ledit instrument optique étant monté sur une plate-forme optique (10), ledit dispositif comprenant :
un chemin optique de mesure (C') principalement commun avec le chemin d'observation (C) de l'instrument optique,
une source lumineuse de mesure (6), disposée sensiblement à une extrémité du chemin optique d'observation (C),
un détecteur de mesure (11) du faisceau optique issu de la source lumineuse de mesure (6), disposé de telle sorte que ce faisceau de mesure a parcouru au moins une fois le chemin optique d'observation (C),
au moins une référence lumineuse disposée sur le chemin optique de mesure (C'),
des moyens passifs d'isolation (8) de cette référence lumineuse vis à vis de vibrations latérales transmises par la plate-forme optique (10), dans une gamme de fréquences prédéterminée, créant ainsi une référence lumineuse pseudo-inertielle.
**caractérisé en ce que** les moyens passifs d'isolation (8) comprennent au moins un isolateur passif (8) comportant un segment sous forme de poutre en matériau élastomère adaptée à filtrer les vibrations latérales qui sont imposées à son support dans la gamme de fréquences prédéterminée.

2. Dispositif selon la revendication 1, **caractérisé en ce que** la bande de fréquence d'isolation de la référence lumineuse pseudo-inertielle est comprise entre quelques Hz et quelques centaines de Hz.

3. Dispositif selon l'une quelconque des revendications précédentes, **caractérisé en ce que** la référence lumineuse pseudo-inertielle est un miroir de collimation (5) destiné au renvoi du faisceau optique, disposé sensiblement sur le chemin optique d'observation (C), sensiblement à l'autre extrémité du chemin optique d'observation (C), par rapport à la source lumineuse de mesure (6).

4. Dispositif selon l'une quelconque des revendications 1 à 2, **caractérisé en ce que** la référence lumineuse pseudo-inertielle est la source lumineuse(6) dotée de moyens d'isolation passive (8).

5. Dispositif selon la revendication 1, **caractérisé en ce que** l'isolateur passif (8) est une poutre en matériau souple à fort coefficient d'amortissement, par exemple un matériau élastomère, de section sensiblement constante solidarisé en ses deux extrémités, d'une part au niveau d'une structure (9) qui soutient la référence lumineuse pseudo-inertielle (5), et, d'autre part, au niveau de la plate-forme optique (10).

6. Dispositif selon la revendication 1, **caractérisé en ce que** l'isolateur passif (8) est une poutre en matériau souple à fort coefficient d'amortissement, par exemple un matériau élastomère, de section convergente/divergente dite "diabolo".

7. Dispositif selon l'une quelconque des revendications 1 à 6, **caractérisé en ce qu'**il comporte une structure intermédiaire (12) rigide, solidarisée par une extrémité à la plate-forme (10) de l'instrument optique, cette structure intermédiaire (12) comportant des moyens de limitation de déplacement de l'interface structurelle (9) de la référence lumineuse pseudo-inertielle (5), lorsque l'instrument est soumis à des conditions d'accélération comprises dans une plage prédéterminée, supérieures à celles rencontrées durant la phase opérationnelle.

8. Dispositif selon la revendication 7, **caractérisé en ce que** la structure intermédiaire (12) comporte des bords inférieurs coopérant avec des butées (13), solidarisée à l'interface structurelle (9) de la référence lumineuse pseudo-inertielle (5), la disposition respective des butées (13) et des bords inférieurs de la structure intermédiaire (12) déterminant un espace libre (14) lorsque l'instrument optique est en conditions opérationnelles, par exemple en gravité nulle pour une utilisation en orbite.

9. Dispositif selon l'une quelconque des revendications 1 à 8, **caractérisé en ce que** la référence lumineuse pseudo-inertielle (5) est suspendue par N isolateurs passifs (8a, 8b, 8c) ayant leurs axes disposés dans un même plan perpendiculaire à la direction de l'axe vertical du miroir de collimation (5), ces N axes concourant au niveau de l'axe vertical du miroir de collimation (5), ces isolateurs passifs (8a, 8b, 8c) étant régulièrement angulairement espacés.

10. Dispositif selon l'une quelconque des revendications 1 à 8, **caractérisé en ce que** la référence lumineuse pseudo-inertielle (5) est suspendue par N isolateurs passifs (N > 1), d'axes colinéaires, parallèles à l'axe vertical du miroir de collimation (5), et agencés régulièrement sur un cercle sous l'interface structurelle (9).

11. Dispositif selon l'une quelconque des revendications 1 à 8, **caractérisé en ce que** la référence lumineuse pseudo-inertielle (5) est suspendue par un isolateur passif (8) unique, dirigé sensiblement selon un axe normal au miroir de collimation (5).

12. Dispositif de contrôle actif de vibrations haute fréquence de ligne de visée d'instrument optique, ledit dispositif de contrôle comportant un dispositif de mesure de bougé selon l'une quelconque des revendications précédentes, et en outre des moyens de corriger le décalage du faisceau optique d'observation en jouant sur l'orientation d'un miroir plan commandable (3) placé sur le chemin optique d'observation (C).

## Patentansprüche

1. Gerät zum Messen von Sichtlinien-Jitter für ein optisches Instrument, das aus einem Beobachtungspfad (C) besteht, wobei das besagtes optisches Instrument auf eine optische Plattform (10) montiert ist, wobei das besagtes Gerät besteht aus:
einem optischen Messpfad (C'), der in erster Linie dem Beobachtungspfad (C) des optischen Instruments entspricht,
eine Lichtmessungsquelle, die im Wesentlichen an einem Ende des optischen Beobachtungspfads (C) angeordnet ist,
einem Detektor (11) zum Messen des optischen Strahls, der aus der Lichtmessungsquelle (6) stammt und so angeordnet ist, dass dieser Messstrahl den optischen Beobachtungspfad (C) mindestens einmal durchläuft,
mit mindestens einer Licht-Referenz, die auf dem optischen Messpfad (C') angeordnet ist,
eines Mittels (8) zur Passivisolation dieser Licht-Referenz in Bezug zu den Lateralschwingungen, die von der optischen Plattform (10) in einem vorbestimmten Frequenzbereich übertragen werden und damit eine pseudo-träge Licht-Referenz erzeugen,
**dadurch gekennzeichnet, dass** die Mittel der Passivisolation (8) mindestens aus einem Passivtrenner (8) bestehen, der einen Bereich in Form eines Elastomerstrahls umfasst, der geeignet ist, die Lateralschwingungen, die dieser Unterstützung im vorbestimmten Frequenzbereich auferlegt sind, zu filtern.

2. Gerät nach Anspruch 1, **dadurch gekennzeichnet, dass** der Frequenz-Isolationsbereich der pseudo-trägen Licht-Referenz zwischen mehreren Hz und mehreren hundert Hz liegt.

3. Gerät nach einem der vorherigen Ansprüche, **dadurch gekennzeichnet, dass** die pseudo-träge Licht-Referenz ein Kollimator-Spiegel (5) ist, der zur Reflexion des optischen Strahls entwickelt wurde, im Wesentlichen auf dem optischen Beobachtungspfad (C) angeordnet ist und zwar im Wesentlichen am anderen Ende des optischen Beobachtungspfads (C), relative zur Lichtmessungsquelle (6).

4. Gerät nach einem der Ansprüche 1 bis 2, bei dem die pseudo-träge Licht-Referenz die Lichtquelle (6) ist, ausgerüstet mit Mitteln der Passivisolation (8).

5. Gerät nach Anspruch 1, **dadurch gekennzeichnet, dass** die Passivisolation (8) ein Strahl ist, der aus flexiblem Material mit einem starken Dämpfungskoeffizienten besteht, z. B. einem Elastomer-Material, mit einem im Wesentlichen konstanten Querschnitt der an seinen beiden Enden fest verbunden ist, einerseits an einer Struktur (9), die die pseudo-träge Licht-Referenz (5) unterstützt und andererseits an der optischen Plattform (10).

6. Gerät nach Anspruch 1, **dadurch gekennzeichnet, dass** die Passivisolation (8) ein Strahl ist, der aus flexiblem Material mit einem starken Dämpfungskoeffizienten besteht, z. B. einem Elastomer-Material mit einem sogenannten "Diabolo" konvergenten/divergenten Querschnitt.

7. Gerät nach einem der Ansprüche 1 bis 6, **dadurch gekennzeichnet, dass** es eine starre Zwischenstruktur (12) umfasst, die an einem End mit der Plattform (10) des optischen Instruments verbunden ist, wobei diese Zwischenstruktur (12) Mittel zur Einschränkung der Bewegung der strukturellen Schnittstelle (9) der pseudo-trägen Licht-Referenz (5) umfasst, wenn das Instrument den Beschleunigungsbedingungen unterworfen wird, die in einem vorbestimmten Bereich herbeigeführten und grösser als diejenigen sind, die während der Betriebsphase erlebt werden.

8. Gerät nach Anspruch 7, **dadurch gekennzeichnet, dass** die Zwischenstruktur (12) untere Ränder enthält, die mit Anschlägen (13) arbeiten, mit der strukturellen Schnittstelle (9) der pseudo-trägen Licht-Referenz (5) verbunden sind und die betreffende Anordnung der Anschläge (13) und die unteren Ränder der Zwischenstruktur (12) einen freien Raum (14) bestimmen, wenn das optische Instrument Betriebsbedingungen unterliegt, z. B. in Schwerelosigkeit zur Verwendung in der Umlaufbahn.

9. Gerät nach einem der Ansprüche 1 bis 8, **dadurch gekennzeichnet, dass** die pseudo-träge Licht-Referenz (5) durch N Passivisolatoren (8a, 8b, 8c) aufgehoben wird, die ihre Achsen auf der gleichen Eben angeordnet haben, die sich senkrecht zur Richtung der vertikalen Achse des Kollimator-Spiegels (5) befindet, wobei diese N Achsen bei der vertikalen Achse des Kollimator-Spiegel (5) verschmelzen, wobei diese Passivisolatoren (8a, 8b, 8c) gleichmäßig schräg verteilt sind.

10. Gerät nach einem der Ansprüche 1 bis 8, **dadurch gekennzeichnet, dass** die pseudo-träge Licht-Referenz (5) durch N Passivisolatoren (N > 1) mit Parallelachsen aufgehoben wird, parallel zur vertikalen Achse des Kollimator-Spiegels (5) und gleichmäßig über einen Kreis unter der strukturellen Schnittstelle (9) angeordnet sind.

11. Gerät nach einem der Ansprüche 1 bis 8, **dadurch gekennzeichnet, dass** die pseudo-träge Licht-Referenz (5) durch eine einmalige Passivisolation (8) aufgehoben und im Wesentlichen entlang einer Achse ausgerichtet ist, die sich senkrecht zum Kollimator-Spiegel (5) befindet.

12. Gerät zum aktiven Überwachen von Hochfrequenzschwingungen der Sichtlinie des optischen Instruments, wobei besagtes Überwachungsgerät aus einer Jitter-Messvorrichtung gemäß den vorherigen Ansprüchen besteht und zudem, Mittel zur Korrektur des Ausgleichs des optischen Beobachtungsstrahls durch Manipulieren der Ausrichtung eines kontrollierbaren Planspiegels (3), der auf dem optischen Beobachtungspfad (C) angebracht ist.

## Claims

1. Device for measuring the line of sight jitter of an optical instrument that comprises an observation path (C), whereby said optical instrument is mounted on an optical platform (10), said device comprising:
an optical measurement path (C') that is primarily common with the observation path (C) of the optical instrument,
a light measurement source that is arranged essentially at one end of the optical observation path (C),
a detector (11) for measuring the optical beam that comes from the light measurement source (6), arranged in such a way that this measurement beam has passed through the optical observation path (C) at least once,
at least one light reference that is arranged on the optical measurement path (C'),
means (8) for passive isolation of this light reference with regard to lateral vibrations transmitted by the optical platform (10) in a predetermined range of frequencies, thus creating a pseudo-inertial light reference,
**characterized in that** the passive isolation means (8) comprises at least one passive isolator (8) comprising a segment in the form of an elastomer beam that is suitable for filtering the lateral vibrations that are imposed on its support in the predetermined frequency range.

2. Device according to claim 1, **characterized in that** the frequency isolation band of the pseudo-inertial light reference is between several Hz and several hundred Hz.

3. Device according to any one of the preceding claims, **characterized in that** the pseudo-inertial light reference is a collimation mirror (5) that is designed for the reflection of the optical beam, arranged essentially on the optical observation path (C), essentially at the other end of the optical observation path (C), relative to the light measurement source (6).

4. Device according to any one of claims 1 to 2, wherein the pseudo-inertial light reference is the light source (6) equipped with passive isolation means (8).

5. Device according to claim 1, **characterized in that** the passive isolator (8) is a beam that is made of flexible material with a strong damping coefficient, for example an elastomer material, with a essentially constant cross-section that is made integral at its two ends, on one hand at a structure (9) that supports the pseudo-inertial light reference (5), and, on the other hand, at the optical platform (10).

6. Device according to claim 1, **characterized in that** the passive isolator (8) is a beam that is made of flexible material with a strong damping coefficient, for example an elastomer material, with a so-called "diabolo" convergent/divergent cross-section.

7. Device according to any one of claims 1 to 6, **characterized in that** it comprises a rigid intermediate structure (12), made integral at one end with the platform (10) of the optical instrument, whereby this intermediate structure (12) comprises means for limitation of movement of the structural interface (9) of the pseudo-inertial light reference (5), when the instrument is subjected to acceleration conditions encompassed in a predetermined range, greater than those encountered during the operational phase.

8. Device according to claim 7, **characterized in that** the intermediate structure (12) comprises lower edges that work with stops (13), made integral with the structural interface (9) of the pseudo-inertial light reference (5), the respective arrangement of the stops (13) and lower edges of the intermediate structure (12) determining a free space (14) when the optical instrument is under operational conditions, for example in zero gravity for use in orbit.

9. Device according to any one of claims 1 to 8, **characterized in that** the pseudo-inertial light reference is suspended by N passive isolators (8a, 8b, 8c) that have their axes arranged in the same plane that is perpendicular to the direction of the vertical axis of the collimation mirror (5), whereby these N axes merge at the vertical axis of the collimation mirror (5), these passive isolators(8a, 8b, 8c) being uniformly angularly spaced.

10. Device according to any one of claims 1 to 8, **characterized in that** the pseudo-inertial light reference is suspended by N passive isolators (N > 1) with collinear axes, parallel to the vertical axis of the collimation mirror (5), and arranged uniformly over a circle under the structural interface (9).

11. Device according to any one of claims 1 to 8, **characterized in that** the pseudo-inertial light reference (5) is suspended by a unique passive isolator (8), essentially directed along an axis that is perpendicular to the collimation mirror (5).

12. Device for active monitoring of high-frequency vibrations of the optical instrument's line of sight, whereby said monitoring device comprises a jitter measuring device according to any of the preceding claims, and in addition, means for correcting the offset of the optical observation beam by manipulating the orientation of a controllable plane mirror (3) that is placed on the optical observation path (C).
